**Europäisches Patentamt**

**European Patent Office**

**Office européen des brevets**

(19)

(11) Veröffentlichungsnummer: **0 226 531**
B1

(12) EUROPÄISCHE PATENTSCHRIFT

(45) Veröffentlichungstag der Patentschrift:
08.11.89

(51) Int. Cl.⁴: **H02B 11/02**

(21) Anmeldenummer: 86730199.6

(22) Anmeldetag: 01.12.86

(54) Einschubrahmen mit einer Fahrschiene für ein elektrisches Schaltgerät.

(30) Priorität: 13.12.85 DE 3544664

(43) Veröffentlichungstag der Anmeldung:
24.06.87 Patentblatt 87/26

(45) Bekanntmachung des Hinweises auf die Patenterteilung:
08.11.89 Patentblatt 89/45

(84) Benannte Vertragsstaaten:
DE FR GB IT SE

(56) Entgegenhaltungen:
DE-B- 1 291 398
FR-A- 1 051 157
FR-A- 1 162 903
US-A- 3 483 338

(73) Patentinhaber: Siemens Aktiengesellschaft,
Wittelsbacherplatz 2, D-8000 München 2(DE)

(72) Erfinder: Schultz, Rosemarie, Peter-Vischer-Strasse 1,
D-1000 Berlin 41(DE)
Erfinder: Sinnig, Fred, Bekassinenweg 14,
D-1000 Berlin 27(DE)

ACTORUM AG

## Beschreibung

Für elektrische Schaltanlagen ist eine Bauweise bekannt, bei der sich die Schaltgeräte unter gleichzeitiger Trennung der Hauptstromkreise herausziehen lassen, um beispielsweise Wartungsarbeiten vornehmen zu können oder um das Schaltgerät probeweise betätigen zu können. In Verbindung hiermit ist es bekannt, zur Erleichterung einer vollständigen Herausnahme eines Schaltgerätes aus der Schaltanlage Fahrschienen vorzusehen, die zur Benutzung aus der Schaltzelle herausklappbar sind. Beispielsweise können solche Fahrschienen bei Nichtgebrauch senkrecht herunterhängend angeordnet sein (US-A-2 264 755), oder sie können bezüglich ihres Lagerpunktes in eine vertikale Stellung nach oben geklappt werden (US-A-3 663 773). Es stellt jedoch einen nicht unbeträchtlichen Aufwand dar, die Schaltanlagen bzw. die in ihnen befindlichen Einschubrahmen grundsätzlich mit Fahrschienen der genannten Art auszurüsten, da in vielen Fällen solche Fahrschienen nicht benötigt werden, z. B., weil zur Wartung einer größeren Schaltanlage spezielle Hubgeräte oder ähnliche Hilfsmittel bereitstehen, welche die Funktionen der Fahrschienen übernehmen können. Der Erfindung liegt die Aufgabe zugrunde, Fahrschienen der genannten Art als vom Benutzer einer Schaltanlage im Bedarfsfall auf einfache Weise selbst anbringbares Zubehör auszugestalten.

Die Erfindung geht hierzu von einem Einschubrahmen für ein elektrisches Schaltgerät mit einem Gestell und wenigstens einer daran zwischen einer Ruhestellung und einer Betriebsstellung verstellbar angeordneten Fahrschiene für das Schaltgerät aus und löst die genannte Aufgabe dadurch, daß die Fahrschiene und das Gestell des Einschubrahmens mit formschlüssig zusammenwirkenden Verbindungselementen versehen sind, wobei der Formschluß durch eine in Richtung der Schwerkraft erfolgende Verschiebung der Fahrschiene herstellbar und durch eine Verschiebung entgegen der Schwerkraft aufhebbar ist. Auf diese Weise sind die Einschubrahmen zunächst ohne Fahrschienen wirtschaftlicher herstellbar, wobei jedoch die nachträgliche Ausrüstung mit Fahrschienen ohne jeden Bearbeitungsaufwand mit wenigen Handgriffen vorzunehmen ist.

Die formschlüssig wirkenden Verbindungselemente können zugleich als Schwenklager der Fahrschiene ausgebildet sein und es können Anschlagelemente zur Sicherung der Fahrschiene in ihrer Betriebsstellung vorgesehen sein. Bei dieser Anordnung sind die Verbindungselemente und die Anschlagelemente als einfache, robuste Bauteile ausführbar. Als vorteilhaft erweist es sich insbesondere, die Verbindungselemente als mit einem Kragen versehene zylindrische Bolzen und als schlüssellochartige Öffnung auszubilden, wobei der Durchmesser des Bolzens dem engen Teil der Öffnung und der Durchmesser des Kragens dem weiten Teil der Öffnung entsprechend bemessen ausgebildet sind.

Auch die Anschlagelemente können einen mit einem Kragen versehenen Bolzen aufweisen, wobei als Gegenstück eine zur Aufnahme des Bolzens bestimmte Aussparung vorgesehen sein kann. Auf diese Weise wird erreicht, daß bei der Überführung einer Fahrschiene in ihre Betriebsstellung ein zusätzlicher Formschluß herbeigeführt wird, der die Belastbarkeit der Fahrschiene erhöht.

Die erwähnten Bolzen können an dem Gestell des Einschubrahmens angeordnet sein, während die schlüssellochartige Öffnung sowie die Ausnehmung an der Fahrschiene angeordnet sind. Beide Bolzen können gleich sein.

Gleichermaßen als vorteilhaft für eine einfache Handhabung beim Ansetzen der Fahrschienen an den Einschubrahmen und für die Funktion der hierzu vorgesehenen Verbindungselemente als Schwenklager erweist es sich, die Symmetrieachse der schlüssellochartigen Öffnung bei senkrechter Ruhestellung der Fahrschiene gegenüber der Senkrechten geneigt anzuordnen und die Aussparung in der Verlängerung der Symmetrieachse am Rande des mit der Öffnung versehenen Teiles anzubringen, wobei die Symmetrieachse der Aussparung rechtwinklig zu der Symmetrieachse der schlüssellochartigen Öffnung steht. Die Fahrschiene ist hierdurch gegen eine Verschiebung im Bereich der Verbindungselemente beim Erreichen der Betriebsstellung gesichert, weil die Aussparung und der weitere Bolzen einen zusätzlichen Formschluß bilden. Es empfiehlt sich in diesem Zusammenhang, die mit dem weiteren Bolzen zusammenwirkende Kante des mit der Aussparung versehenen Teiles als Übergang zu der Aussparung mit einem abgerundeten Bereich zu vesehen. Auf diese Weise wird das Einlaufen der Aussparung auf den weiteren Bolzen in dem Fall erleichtert, daß bei der vorangegangenen Schwenkung eine gewisse Verschiebung der Fahrschiene im Bereich der Verbindungselemente eingetreten sein sollte. Im übrigen hat es sich gezeigt, daß es zu einer störungsfreien Wirkungsweise beiträgt, wenn die Symmetrieachse der schlüssellochartigen Öffnung in Richtung der Betriebsstellung der Fahrschiene gegenüber der Senkrechten um etwa 45° geneigt angeordnet ist.

An sich ist es möglich, die Verbindungselemente so auszuführen, daß sie nicht nur einen Formschluß bilden und als Schwenklager wirken, sondern auch in der vertikalen Ruhestellung eine Arretierung der Fahrschienen bewirken. Da eine solche Wirkungsweise jedoch vom Benutzer nicht leicht zu erkennen ist, empfiehlt es sich demgegenüber, die Fahrschienen in ihrer Ruhestellung durch einen an einer Seitenwand des Gestelles des Einschubrahmens um ein Gelenk schwenkbar und in eine Führungsöffnung eingreifend angeordneten Riegel feststellbar zu machen. Da das Vorhandensein eines solchen Riegels und dessen Wirkungsweise einem Benutzer unmittelbar verständlich sind, bereitet die Bedienung keine Schwierigkeiten. Die Führungsöffnung für einen solchen Riegel kann in einfacher Weise durch eine von zwei parallelen Durchbrechungen der Seitenwand des Gestelles gebildet sein, wobei der zwischen den Durchbrechungen befindliche Wandteil als Bügel aus der Ebene der Seitenwand herausgedrückt ist. Eine Rückstellfeder für einen solchen Riegel kann in besonders platzsparender Weise in einer fensterartigen Öffnung der Seitenwand des Gestelles untergebracht sein. Als Riegelzapfen genügt ein einfacher, aus dem Material des Riegels herausgedrückter Butzen oder Zapfen, wenn durch eine gabelartige Ausführung des Riegels an seinem der Fahrschiene zugewandten Ende dafür gesorgt ist, daß die Fahrschiene und der Riegel spielarm miteinander in Eingriff gebracht werden können.

Die Erfindung wird im folgenden anhand des in den Figuren dargestellten Ausführungsbeispieles näher erläutert.

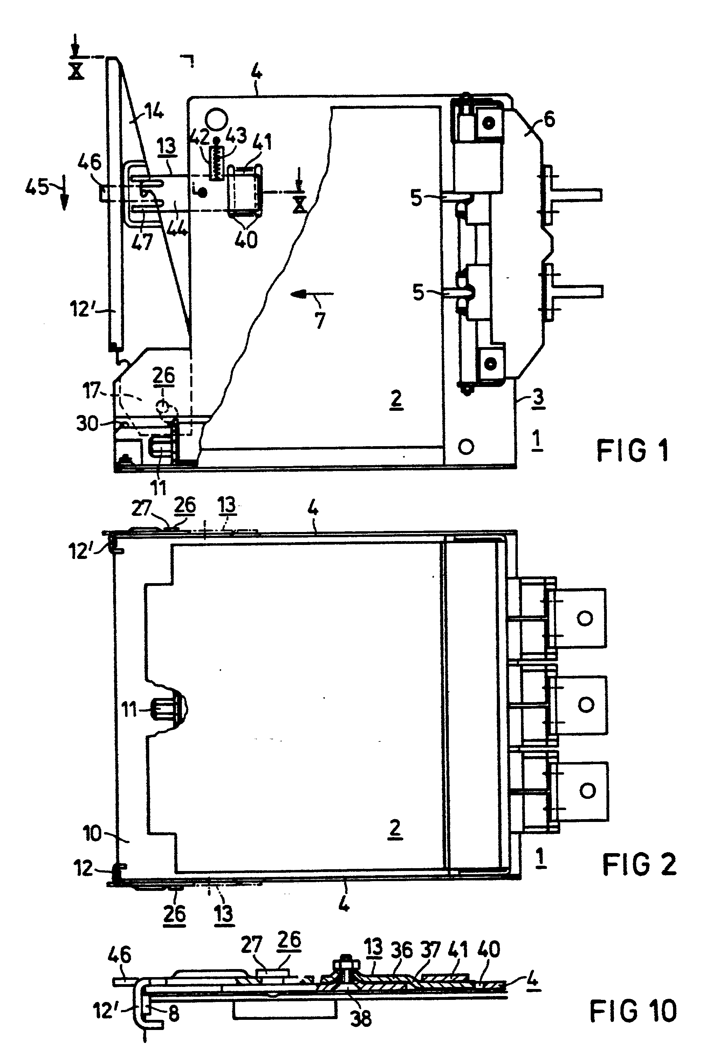

Die Figuren 1 und 2 zeigen einen Einschubrahmen für einen Niederspannungs-Leistungsschalter in einer geschnittenen Seitenansicht bzw. in einer vereinfachten Draufsicht.

Eine Fahrschiene ist als Einzelteil in den Figuren 3 und 4 in zwei senkrecht zueinander stehenden Ansichten sowie in der Figur 5 im Schnitt entlang der Linie V - V in Figur 5 dargestellt.

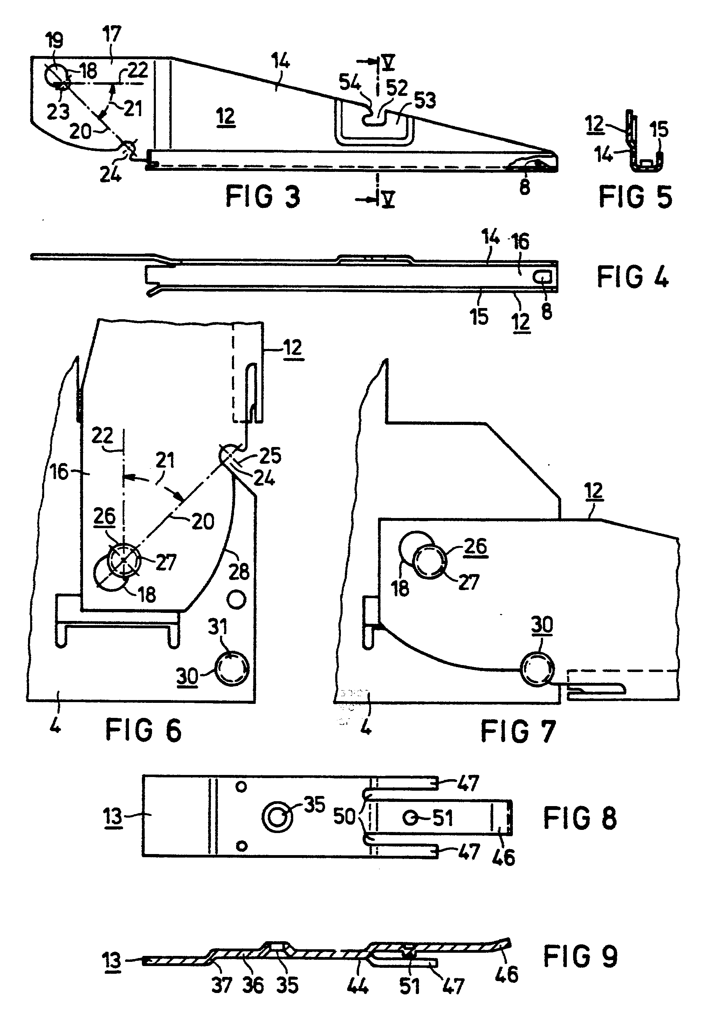

Die Figuren 6 und 7 zeigen als Einzelheit das Zusammenwirken der Verbindungselemente und der Anschlagelemente an einer Fahrschiene und dem Gestell des Einschubrahmens. Hierbei befindet sich die Fahrschiene in der Figur 6 in ihrer vertikalen Ruhestellung, während sie in der Figur 7 in ihre horizontale Betriebsstellung geschwenkt dargestellt ist.

In den Figuren 8 und 9 ist ein Riegel zur Sicherung einer Fahrschiene in ihrer vertikalen Ruhestellung in einer Ansicht und im Schnitt gezeigt.

Die Figur 10 zeigt einen Teil einer Seitenwand eines Einschubrahmens im Schnitt mit Einzelheiten des Riegels in seiner montierten Lage.

Der in den Figuren 1 und 2 gezeigte Einschubrahmen 1 ist zur Aufnahme eines Niederspannungs-Leistungsschalters bestimmt. Der Einschubrahmen ist seinerseits in bekannter Weise zum Einbau in eine Schaltanlage oder einen Schaltschrank vorgesehen. Ein Leistungsschalter 2 ist schematisch angedeutet; von der Darstellung von Einzelheiten des Leistungsschalters kann abgesehen werden, da die noch zu beschreibende Fahrschienenanordnung unabhängig von der Bauform eines Leistungsschalters anwendbar ist. Es ist lediglich erforderlich, daß der Leistungsschalter mit der Fahrschienenanordnung zusammenwirkende Elemente wie z. B. Rollen, Gleitstücke oder Kufen besitzt.

Der Einschubrahmen 1 weist ein Gestell 3 auf, welches in üblicher Weise aus Blechteilen zusammengesetzt sein kann. Die Formgebung dieser Teile im einzelnen sowie ihre Verbindung ist gleichfalls für die zu beschreibende Fahrschienenanordnung von untergeordneter Bedeutung, so daß von einer näheren Beschreibung des Aufbaus des Gestelles 3 abgesehen wird. Es ist jedoch zu erwähnen, daß das Gestell 3 zwei Seitenwände 4 aufweist, von denen in der Figur 1 die vordere entfernt ist, um die dahinterliegenden Teile sichtbar zu machen. Der Leistungsschalter 2 ist in bekannter Weise mit Anschlußstücken 5 versehen, die in zwei parallelen Reihen übereinander angeordnet sind und in der dargestellten Stellung des Leistungsschalters mit einer Trennkontaktanordnung 6 im Eingriff stehen. Beispielsweise kann die Trennkontaktanordnung 6 Trennkontaktblöcke gemäß der US-A-4 486 636 enthalten. Soll der Leistungsschalter 2 nach Trennung seiner Anschlußstücke 5 von der Trennkontaktanordnung 6 aus dem Einschubrahmen 1 herausgenommen werden, so geschieht dies durch eine Verschiebung des Leistungsschalters 2 in Richtung des Pfeiles 7 zunächst innerhalb des Einschubrahmens, beispielsweise unmittelbar durch Gleiten oder Rollen hierfür vorgesehener Elemente des Leistungsschalters 2 auf einem Bodenblech 10 des Gestelles 3. Hierzu kann eine Gewindespindel benutzt werden, deren zum Aufstecken eines Werkzeuges mit einem Sechskantkopf 11 versehenes vorderes Ende in den Figuren 1 und 2 gezeigt ist. Für die weitere Bewegung sind spiegelbildlich ausgebildete Fahrschienen 12 und 12' vorgesehen, die gelenkig an den Seitenwänden 4 des Gestelles 3 angebracht sind. In der dargestellten Ruhelage befinden sich die Fahrschienen 12 in einer vertikalen Stellung und werden in dieser durch je einen Riegel 13 festgehalten.

Einzelheiten der Fahrschiene 12 werden im folgenden anhand der Figuren 3, 4 und 5 erläutert. Wie insbesondere die Figur 5 zeigt, weist die Fahrschiene 12 im Querschnitt eine U-förmige Gestalt auf, wobei die Schenkel 14 und 15 zur Führung der erwähnten Elemente des Leistungsschalters 2 vorgesehen sind und die zwischen diesen Schenkeln liegende Bodenfläche 16 die eigentliche Gleit- oder Rollfläche für diese Elemente bildet. Ein am äußeren Ende der Bodenfläche 16 herausgebogener Anschlag 8 begrenzt den Fahrweg des Leistungsschalters 2. Der Schenkel 14 der Fahrschiene 12 hat etwa die Gestalt eines spitzwinkligen Dreieckes, an das sich ein annähernd rechteckiger Endteil 17 anschließt. Dieser Endteil 17 der Fahrschiene 12 ist etwa dort, wo der U-förmige Bereich der Fahrschiene endet, gegenüber der Ebene des dreieckförmigen Abschnittes des Schenkels 14 abgekröpft. Diese Abkröpfung kann etwa entsprechend der Dicke der Seitenwände 4 des Gestelles 3 in den Figuren 1 und 2 bemessen sein. Der rechteckige Endteil 17 des Schenkels 14 enthält eine schlüssellochartig gestaltete Durchgangsöffnung 18, deren Symmetrieachse 20 unter einen Winkel 21 von etwa 45° zur Längserstreckung der Fahrschiene 12 angeordnet ist. Diese Längserstreckung ist durch eine Linie 22 bezeichnet, die mit der aufrechten Stellung der Fahrschiene in den Figuren 1, 2 und 6 übereinstimmt. Ein als Lageröffnung wirksamer engerer Teil 23 der Öffnung 17 ist einer Aussparung 24 zugewandt, die sich am Rande des Endteiles 17 nahe dem Ende des U-förmigen Teiles der Fahrschiene 12 befindet. Die mit 25 bezeichnete Symmetrieachse der Aussparung 24 steht hierbei rechtwinklig zu der Symmetrieachse 20 der Öffnung 17.

Zur Anbringung und gelenkigen Lagerung der Fahrschiene 12 ist der Einschubrahmen 1 mit Bolzen 26 versehen, die in den Seitenwänden 4 (Figuren 2, 6 und 7) befestigt sind. Die Bolzen 26 besitzten einen Kragen 27, dessen Durchmesser dem weiteren Teil 18 der Öffnung 17 (Figuren 4, 6 und 7) entspricht. An jeder Seitenwand 4 ist ferner ein weiterer Bolzen 30 befestigt, der von der gleichen Ausführung wie der Bolzen 26 sein kann. Die relative Lage der Bolzen 26 und 30 ist so gewählt, daß die Bolzen 30 als Anschlag wirken und sich eine horizontale Stellung der Bodenfläche 16 der Fahrschiene 12 ergibt.

Die Fahrschienen 12 und 12' sind gemäß der Darstellung in den Figuren 3, 4 und 5 einstückige Einzelteile. Die nicht gesondert dargestellte Fahrschiene 12' unterscheidet sich von der Fahrschiene 12 lediglich durch ihre spiegelbildliche Ausführung. Zur Anbringung an dem Einschubrahmen 1 werden die Fahrschienen mit dem weiteren Teil 19 der Öffnungen 18 über den Kragen 27 der Bolzen 26 geschoben, wobei die Fahrschienen unter der Wirkung der Schwerkraft mit dem engeren Teil 23 der Öffnungen 18 in Eingriff gelangen. Eine Abnahme der Fahrschienen 12 von dem Einschubrahmen 1 ist dementsprechend durch Anheben der Fahrschienen 12 entgegen der Wirkung der Schwerkraft und anschließende seitliche Bewegung zu erreichen. Werden die Fahrschienen ausgehend von einer vertikalen Ruhestellung nach vorn in Richtung der Horizontalen geschwenkt, so gelangen die Aussparungen 24 in Eingriff mit den weiteren Bolzen 30, wobei deren Kragen 31 entsprechend der Darstellung in der Figur 7 über die Aussparung 24 greift und sich hierdurch eine zusätzliche Sicherung gegen eine Bewegung quer zur Schwenkrichtung ergibt. Durch die gewählte rechtwinklige Zuordnung der Symmetrieachsen der Öffnungen 17 und der Aussparungen 24 wird außerdem erreicht, daß in der heruntergeklappten Stellung der Fahrschiene 12 gemäß der Figur 7 eine Verschiebung der Fahrschiene 12 relativ zu dem Bolzen 26 ausgeschlossen ist und somit keine Gefahr besteht, daß sich die Fahrschiene 12 unbeabsichtigt von dem Einschubrahmen 1 löst. Das Zusammenwirken der Aussparung 24 mit dem Bolzen 30 wird dadurch erleichter, daß die Fahrschiene 12 einen an die Aussparung 24 angrenzenden abgerundeten Bereich 28 besitzt.

Im folgenden werden Einzelheiten des in der Figur 1 gezeigten Riegels 13 erläutert, der zur Aufrechterhaltung der vertikalen Ruhestellung der Fahrschienen 12 und 12' vorgesehen ist. Gemäß den Figuren 8 und 9 ist der Riegel 13 ein einstückiges Blechteil, das mit einer Lageröffnung 35 zur Lagerung als zweiarmiger Hebel auf einer Schraube 38 (Figur 10) versehen ist. Der kürzere Hebelteil 36 ist mit einer Abkröpfung 37 versehen, die etwa der Materialstärke der Seitenwände 4 entspricht, so daß der Riegel 13 mit dem Hebelteil 36 entsprechend der Figur 1 durch eine von zwei parallelen schlitzförmigen Durchbrechungen 40 jeder Seitenwand 4 eingeschoben werden kann. Ein bündiges Abschließen des Hebelteiles 36 mit der Innenfläche jeder Seitenwand 4 ist dadurch erreicht, daß der zwischen den Durchbrechungen 40 befindliche Teil der Seitenwand 4 in Gestalt eines Bügels 41 nach außen durchgedrückt ist, wie dies insbesondere die Figur 10 zeigt. In einer weiteren Durchbrechung 42 der Seitenwand 4 ist eine Zugfeder 43 angeordnet, durch die ein vorderer Hebelteil 44 des Riegels 13 in Richtung des Pfeiles 45 in Figur 1 vorgespannt wird. Dieser Hebelteil ist gegabelt ausgeführt und weist eine mittlere, zur Anlage an der Außenseite der zugehörigen Fahrschiene bestimmte Zunge 46 sowie zwei kürzere, zur Anlage an der Innenseite der zugehörigen Fahrschiene bestimmte Zungen 47 auf. Der zum Übergreifen der Fahrschiene erforderliche Abstand zwischen den Zungen 46 und 47 wird durch eine Abkröpfung im Bereich des Fußes zweier Ausschnitte 50 erreicht, welche die Zungen 46 und 47 voneinander trennen. Die mittlere Zunge 46 ist mit einem aus dem Material des Riegels 13 herausgedrückten Zapfen oder Butzen 51 versehen, der zum Eingreifen in eine hinterschnittene Ausnehmung 52 des Schenkels 13 jeder Fahrschiene 12 vorgesehen ist. Die Ausnehmung 52 befindet sich in einem aus dem Schenkel 13 herausgedrückten Bereich 53, wobei das Maß der Verformung so gewählt ist, daß sich aufgrund der Ausrichtung der Fahrschienen 12 und des Riegels 13 gegenüber der Seitenwand 4 ein ungehindertes Zusammenwirken ergibt. Für die linke und die rechte Fahrschiene sind gleiche Riegel 13 verwendbar.

Werden die Fahrschienen 12 und 12' aus ihrer horizontalen Betriebsstellung (Figur 7) in die vertikale Ruhestellung (Figuren 1 und 6) überführt, so gelangt der Schenkel 14 zwischen die Zungen 46 und 47. Der Zapfen 51 gelangt dabei auf eine Anlaufschräge 54 im Bereich der Ausnehmung 52, wodurch der Riegel 13 entgegen der Wirkung der Zugfeder 42 angehoben wird, bis der Zapfen 51 in die Hinterschneidung der Ausnehmung 52 einfällt. Aufgrund der gabelartigen Gestaltung des vorderen Hebelteiles 44 des Riegels 13 richten sich die Fahrschiene und der zugehörige Riegel gegeneinander aus, so daß mit einer Störung des Zusammenwirkens durch eine Toleranz an dieser Stelle nicht zu rechnen ist. Demgemäß genügt es, den Zapfen 51 höchstens entsprechend der Materialdicke des Schenkels 13 zu bemessen. Ein solcher Zapfen ist, wie bereits erwähnt, durch plastische Verformung aus dem Material des Riegels 13 heraus herstellbar.

Aus der vorstehenden Beschreibung ist zu entnehmen, daß der Einschubrahmen 1 in seiner Grundausführung lediglich mit den Bolzen 26 und 30 im Bereich jeder Seitenwand 4 zu versehen ist. Der Teilesatz zur Ausrüstung eines solchen Einschubrahmens mit Fahrschienen umfaßt zwei spiegelbildlich ausgeführte Fahrschienen 12 und 12' gemäß den Figuren 3, 4 und 5 sowie zwei gleiche Riegel 13 gemäß den Figuren 8 und 9, da diese beidseitig verwendbar sind. Hinzu kommt für jeden der Riegel eine Schraube als Schwenklager sowie eine Zugfeder zur Vorspannung des Riegels in seine Sperrstellung. Diese Teile sind mit wenigen Handgriffen an dem Einschubrahmen 1 anzubringen.

**Patentansprüche**

1. Einschubrahmen (1) für ein elektrisches Schaltgerät (2) mit einem Gestell (3) und wenigstens einer daran zwischen einer Ruhestellung und einer Betriebsstellung verstellbar angeordneten Fahrschiene (12) für das Schaltgerät (2), **dadurch gekennzeichnet,** daß die Fahrschiene (12) und das Gestell (3) des Einschubrahmens (1) mit formschlüssig zusammenwirkenden Verbindungselementen (18, 26) versehen sind, wobei der Formschluß durch eine in Richtung der Schwerkraft erfolgende Verschiebung der Fahrschiene (12) herstellbar und durch eine Verschiebung entgegen der Schwerkraft aufhebbar ist.

2. Einschubrahmen nach Anspruch 1, **dadurch gekennzeichnet**, daß die formschlüssig wirkenden Verbindungselemente (18, 26) zugleich als Schwenklager der Fahrschiene (12) ausgebildet sind und daß zur Sicherung der Fahrschiene (12) in ihrer Betriebsstellung Anschlagelemente (24, 30) vorgesehen sind.

3. Einschubrahmen nach Anspruch 1, **dadurch gekennzeichnet**, daß die Verbindungselemente als mit einem Kragen (27) versehener zylindrischer Bolzen (26) und als schlüssellochartige Öffnung (18) ausgebildet sind, wobei der Durchmesser des Bolzens (26) dem engen Teil (23) der Öffnung (18) und der Durchmesser des Kragens (27) dem weiten Teil (19) der Öffnung (18) entsprechend bemessen ausgebildet ist.

4. Einschubrahmen nach Anspruch 2, **dadurch gekennzeichnet**, daß die Anschlagelemente durch einen weiteren, mit einem Kragen (31) versehenen Bolzen (30) sowie eine zur Aufnahme des Bolzens (30) bestimmte Aussparung (24) gebildet sind.

5. Einschubrahmen nach Anspruch 3 und 4, **dadurch gekennzeichnet**, daß die Bolzen (26, 30) an dem Gestell (3) des Einschubrahmens (1) und die schlüssellochartige Öffnung sowie die Ausnehmung (24) an der Fahrschiene (12) angeordnet sind.

6. Einschubrahmen nach Anspruch 3 und 4, **dadurch gekennzeichnet**, daß die Symmetrieachse (20) der schlüssellochartigen Öffnung (18) bei senkrechter Ruhestellung der Fahrschiene (12) gegenüber der Senkrechten (22) geneigt angeordnet ist und daß sich die Aussparung (24) in der Verlängerung der Symmetrieachse (20) am Rande des mit der Öffnung (19) versehenen Teiles (12) befindet, wobei die Symmetrieachse (25) der Aussparung (24) rechtwinklig zu der Symmetrieachse (20) der schlüssellochartigen Öffnung (18) angeordnet ist.

7. Einschubrahmen nach Anspruch 4, **dadurch gekennzeichnet**, daß die mit dem weiteren Bolzen (30) zusammenwirkende Kante des mit der Aussparung (24) versehenen Teiles (12) als Übergang zu der Aussparung (24) einen abgerundeten Bereich aufweist.

8. Einschubrahmen nach Anspruch 6, **dadurch gekennzeichnet**, daß die Symmetrieachse (20) der schlüssellochartigen Öffnung (18) in Richtung der Betriebsstellung der Fahrschiene (12) gegenüber der Senkrechten (22) um etwa 45° geneigt angeordnet ist.

9. Einschubrahmen nach einem der vorangehenden Ansprüche, **dadurch gekennzeichnet**, daß die Fahrschienen (12) in ihrer Ruhestellung durch einen an einer Seitenwand (4) des Gestelles (3) um ein Gelenk (35) schwenkbar und in eine Führungsöffnung (40) eingreifend angeordneten Riegel (13) feststellbar ist.

10. Einschubrahmen nach Anspruch 9, **dadurch gekennzeichnet**, daß die Führungsöffnung durch eine von zwei parallelen Durchbrechungen (40) in der Seitenwand (4) des Gestelles (3) gebildet ist und daß der zwischen den Durchbrechungen (40) liegende Wandteil als Bügel (41) aus der Ebene der Seitenwand (4) herausgedrückt ist.

11. Einschubrahmen nach Anspruch 9, **dadurch gekennzeichnet**, daß eine an dem Riegel (13) angreifende Rückstellfeder (43) in einer fensterartigen Öffnung (42) der Seitenwand (4) des Gestelles (3) angeordnet ist.

12. Einschubrahmen nach Anspruch 8, **dadurch gekennzeichnet**, daß der der Fahrschiene (12) zugewandte Hebelteil (44) des Riegels (13) gegabelt ausgebildet ist und daß einer der Gabelarme (46) an seiner zur Anlage an der Fahrschiene (12) bestimmten Innenseite einen herausgedrückten, zum Eingreifen in eine hinterschnittene Ausnehmung (52) der Fahrschiene bestimmten Bolzen (51) trägt.

**Claims**

1. A slide-in frame (1) for an electrical switch plant (2) comprising a support (3) and at least one slide rail (12) for the switchgear (2), which slide rail is arranged on the support (3) so as to be displaceable between an inoperative position and an operative position, characterised in that the slide rail (12) and the support (3) of the slide-in frame (1) are provided with form-locking cooperating connection elements (18, 26), the form-locking being effected by a displacement of the slide rail (12) in the direction of the force of gravity and being released by a displacement in the opposite direction to the force of gravity.

2. A slide-in frame according to claim 1, characterised in that the form-locking connection elements (18, 26) are simultaneously designed as a pivot bearing for the slide rail (12) and in that stop elements (24, 30) are provided for securing the slide rail (12) in its operative position.

3. A slide-in frame according to claim 1, characterised in that the connection elements are designed as a cylindrical bolt (26) provided with a collar (27) and as a keyhole-shaped aperture (18), the diameter of the bolt (26) being dimensioned so as to correspond to the narrow portion (23) of the aperture (18) and the diameter of the collar (27) being dimensioned so as to correspond to the wide portion (19) of the aperture (18).

4. A slide-in frame according to claim 2, characterised in that the stop elements are formed by a further bolt (30) provided with a collar (31) and a recess (24) for receiving the bolt (30).

5. A slide-in frame according to claims 3 and 4, characterised in that the bolts (26, 30) are arranged on the support (3) of the slide-in frame (1) and the keyhole-shaped aperture and the recess (24) are arranged on the slide rail (12).

6. A slide-in frame according to claims 3 and 4, characterised in that the axis of symmetry (20) of the keyhole-shaped aperture (18) is arranged inclined relative to the vertical (22) in the vertical inoperative position of the slide rail (12) and in that the recess (24) is disposed in the extension of the axis of symmetry (20) at the edge of the part (12) provided with the aperture (18), the axis of symmetry (25) of the recess (24) lying at right angles to the axis of symmetry (20) of the keyhole-shaped aperture (18).

7. A slide-in frame according to claim 4, characterised in that the edge of the part (12) provided with the recess (24) cooperating with the additional bolt (30) comprises a rounded region as a transition to the recess (24).

8. A slide-in frame according to claim 6, characterised in that the axis of symmetry (20) of the keyhole-shaped aperture (18) is arranged inclined through approximately 45° relative to the vertical (22) in the direction of the operative position of the slide rail (12).

9. A slide-in frame according to any one of the preceding claims, characterised in that the slide rail (12) can be locked in its inoperative position by a locking bar (13) arranged on a lateral wall (4) of the support (3) so as to be pivotable about a hinge joint (35) and so as to engage in a guide opening (40).

10. A slide-in frame according to claim 9, characterised in that the guide opening is formed by one of two parallel through apertures (40) in the lateral wall (4) of the support (3) and in that the wall part lying between the through apertures (40) is pushed in the manner of a yoke (41) out of the plane of the lateral wall (4).

11. A slide-in frame according to claim 9, characterised in that a restoring spring (43) acting upon the locking bar (13) is arranged in a window-like opening (42) in the lateral wall (4) of the support (3).

12. A slide-in frame according to claim 8, characterised in that the lever part (44) of the locking bar (13) facing the slide rail (12) is forked and in that one of the fork arms (46) comprises on its inside intended to abut against the slide rail (12) a pressed-out lug (51) for engaging in an undercut recess (52) of the slide rail.

**Revendications**

1. Cadre formant tiroir (1) pour un appareil électrique de commutation (2) comportant un châssis (3) et au moins une glissière (12) montée sur le châssis de manière à être déplaçable entre une position de repos et une position de service, pour l'appareil de commutation (2), caractérisé par le fait que la glissière (12) et le châssis (3) du cadre formant tiroir (1) sont pourvus d'éléments de liaison (18, 26) coopérant selon une liaison par formes complémentaires, qui peut être établie au moyen d'un déplacement de la glissière (12) dans le sens de la force de la pesanteur et peut être supprimée au moyen d'un déplacement à l'encontre de la force de la pesanteur.

2. Cadre formant tiroir suivant la revendication 1, caractérisé par le fait que les éléments de liaison (18, 26) coopérant selon une liaison par formes complémentaires sont réalisés simultanément sous la forme de paliers pivotants de la glissière (12) et que des éléments de butée (24, 30) sont prévus pour bloquer la glissière (12) dans sa position de service.

3. Cadre formant tiroir suivant la revendication 1, caractérisé par le fait que les éléments de liaison sont réalisés sous la forme de tétons cylindriques (26) munis d'un collet (27) et sous la forme d'une ouverture (18) en forme de trou de serrure, le diamètre du téton (26) étant dimensionné de manière à correspondre à la partie étroite (23) de l'ouverture (18), tandis que le diamètre du collet (27) est dimensionné de manière à correspondre à la partie large (19) de l'ouverture (18).

4. Cadre formant tiroir suivant la revendication 2, caractérisé par le fait que les éléments de butée sont formés par un autre téton (30) pourvu d'un collet (31), ainsi que par un évidement (24) destiné à recevoir le téton (30).

5. Cadre formant tiroir suivant les revendications 3 et 4, caractérisé par le fait que les tétons (26, 30) sont disposés sur le châssis (3) du cadre formant tiroir (1) et que l'ouverture en forme de trou de serrure ainsi que l'évidement (24) sont ménagés dans la glissière (12).

6. Cadre formant tiroir suivant les revendications 3 et 4, caractérisé par le fait que l'axe de symétrie (20) de l'ouverture (18) en forme de trou de serrure est disposé dans une position inclinée par rapport à la verticale (22), lorsque la glissière (12) est dans sa position de repos verticale, et que l'évidement (24) est situé dans le prolongement de l'axe de symétrie (20), au niveau du bord de la partie (12) munie de l'ouverture (19), l'axe de symétrie (25) de l'évidement (24) étant perpendiculaire à l'axe de symétrie (20) de l'ouverture (18) en forme de trou de serrure.

7. Cadre formant tiroir suivant la revendication 4, caractérisé par le fait que le bord, qui coopère avec l'autre téton (30), de la partie (12) prouve de l'évidement (24) comporte, en tant qu'élément de jonction avec l'évidement (24), une partie arrondie.

8. Cadre formant tiroir suivant la revendication 6, caractérisé par le fait que l'axe de symétrie (20) de l'ouverture (18) en forme de trou de serrure est incliné d'environ 45° par rapport à la verticale (22), en direction de la position de service de la glissière (12).

9. Cadre formant tiroir suivant l'une des revendications précédentes, caractérisé par le fait que, dans sa position de repos, la glissière (12) peut être bloquée à l'aide d'un verrou (13) monté de manière à pouvoir pivoter autour d'une articulation (35) sur une paroi latérale (4) du châssis (3) et peut s'engager dans une ouverture de guidage (40).

10. Cadre formant tiroir suivant la revendication 9, caractérisé par le fait que l'ouverture de guidage est formée par l'une des deux passages parallèles (40) ménagés dans la paroi latérale (4) du châssis (3), et que l'élément de paroi, situé entre les passages (40), est ressorti sous la forme d'un étrier (41) hors du plan de la paroi latérale (4).

11. Cadre formant tiroir selon la revendication 9, caractérisé en ce qu'un ressort de rappel (43) qui est accroché au verrou (13), s'engage dans une ouverture en forme de fenêtre (40) de la paroi latérale (4) du châssis (3).

12. Cadre formant tiroir suivant la revendication 8, caractérisé par le fait que l'élément de levier (44), tourné vers la glissière (12), du verrou (13) est réalisé en forme de fourche et que l'un des bras (46) de la fourche porte, sur sa face intérieure, destinée à s'appliquer contre la glissière (12), un téton (51) ressorti par refoulement et destiné à s'engager dans un évidement en dépouille (52) ménagé dans la glissière.

EP 0 226 531 B1

**FIG 1**

**FIG 2**

**FIG 10**

FIG 3

FIG 5

FIG 4

FIG 6

FIG 7

FIG 8

FIG 9